(19) Europäisches Patentamt
European Patent Office
Office européen des brevets

(11) **EP 4 535 917 A2**

(12) **EUROPEAN PATENT APPLICATION**

(43) Date of publication:
**09.04.2025 Bulletin 2025/15**

(21) Application number: **24202853.8**

(22) Date of filing: **26.09.2024**

(51) International Patent Classification (IPC):
*H04W 76/10* (2018.01)

(52) Cooperative Patent Classification (CPC):
**H04W 76/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.10.2023 US 202363587943 P**
**24.05.2024 US 202463651755 P**

(71) Applicant: **Qorvo US, Inc.**
**Greensboro, NC 27409 (US)**

(72) Inventors:
• **SCHODET, Nicolas**
  **Greensboro, 27409 (US)**
• **CARRÉ, Thierry**
  **Greensboro, 27409 (US)**
• **ZOUITEN, Saad**
  **Greensboro, 27409 (US)**

(74) Representative: **D Young & Co LLP**
**3 Noble Street**
**London EC2V 7BQ (GB)**

(54) **SYSTEM AND METHODS FOR SCHEDULING ULTRA-WIDEBAND SESSIONS**

(57) A method for scheduling ultra-wideband (UWB) sessions is provided. The method includes: determining a set of colliding UWB sessions that comprises a first UWB session and a second UWB session partially overlaps with each other in time; computing a first access time of the first UWB session and a second access time of the second UWB session; determining a first credit value based at least on the first access time and a second credit value based at least one the second access time; and selecting one of the first UWB session or the second UWB with a higher credit value.

FIG. 1A

## Description

### CROSS REFERENCE TO RELATED APPLICATIONS

This application claims the benefit of US provisional patent application serial number 63/651,755, filed May 24, 2024, and to US provisional patent application serial number 63/587,943, filed 4 October 2023, the disclosure of which are hereby incorporated herein by reference in its entirety.

### FIELD

The present disclosure relates to ultra-wideband (UWB) enabled devices and systems for scheduling UWB sessions, in particular, to improve the access of UWB sessions with lower priorities.

### BACKGROUND

Ultra-wideband (UWB) communication is widely used in short-range communication amongst electronic devices. Using UWB ranging, an electronic device can measure the distance from another electronic device, and make decisions on the operation based on the distance. Existing protocols define a set of use cases and protocols for UWB ranging. These protocols allow to create several UWB sessions which can be run concurrently. Each UWB session can be of a different type, using a slightly different way to access the medium. Each UWB session includes communication between a controller device and a set of controlee devices. The controller device issues ranging rounds in the UWB session, starting the ranging round with a control message. The controlee devices listen to this control message and apply instructions contained in this message.

A common part of the protocols is that UWB sessions access the medium at a regular interval, called a block duration. Each UWB access is a round, whose duration may be known in advance. Collision between UWB sessions can happen when the durations of two UWB rounds overlap in time (e.g., one UWB session round starts before the end of the other UWB session round). A collision can cause a UWB session to be denied access to the medium for its low priority. There are some existing ways to reduce collision, for example, it is possible to enable hopping to change the time at which the round is positioned into the block, but this must be decided in advance so that controlee devices are able to know the time at which the control message will be transmitted.

However, there is no synchronization between different UWB sessions operated in the existing FiRa protocols. Thus, a method and a system to mitigate the impact of collisions involving UWB session with lower priorities are desired.

## SUMMARY

Particular aspects are set out in the appended independent claims. Various optional embodiments are set out in the dependent claims.

Embodiments of the disclosure provide a method for scheduling ultra-wideband (UWB) sessions. The method includes: determining a set of colliding UWB sessions that comprises a first UWB session and a second UWB session partially overlaps with each other in time; computing a first access time of the first UWB session and a second access time of the second UWB session; determining a first credit value based at least on the first access time and a second credit value based at least on the second access time; and selecting one of the first UWB session or the second UWB with a higher credit value.

In some embodiments, the determining of the first credit value comprises computing a first session deficit value of the first UWB session based on the first access time and a previous first session deficit value; and the determining of the second credit value comprises computing a second session deficit value of the second UWB session based on the second access time and a previous second session deficit value.

In some embodiments, the method further includes: selecting one of the first UWB session and the second UWB with a higher deficit value; updating a respective session deficit value of the selected UWB session by subtracting a round duration of the selected UWB session; and perform access with the selected session.

In some embodiments, the computing of the first access time of the first UWB session and the second access of the second UWB session comprises: determining a time period in which the first UWB session overlaps with the second UWB session; determining a priority sum value including a sum of a first priority value of the first UWB session and a second priority value of the second UWB session; computing a first shared time proportional to a length of the time period and a first priority value of the first UWB session, and inversely proportional to the priority sum value; and computing a second shared time proportional to the length of the time period and a second priority value of the second UWB session, and inversely proportional to the priority sum value.

In some embodiments, the computing of the first access time comprises adding the first shared time with a duration of the first UWB session that is non-overlapping with the second UWB session; and the computing of the second access time comprises adding the second shared time with a duration of the second UWB session that is non-overlapping with the first UWB session.

In some embodiments, the computing of the first access time of the first UWB session and the second access of the second UWB session comprises: determining a priority sum value including a sum of priority values of all colliding UWB sessions; computing the first access time proportional to a duration of the first UWB session and a first priority value of the first UWB session, and inversely proportional to the priority sum value; and computing the second access time proportional to a duration of the second UWB session and a second priority value of the second UWB session, and inversely proportional to the priority sum value.

In some embodiments, the method further includes: computing a first session deficit difference value of the first UWB session to be equal to the first access time; and computing a second session deficit difference value of the second UWB session to be equal to the second access time.

In some embodiments, the determining of the first credit value comprises determining a first deficit sum value equal to the first session deficit difference value and the first session deficit value; and the determining of the second credit value comprises determining a second deficit sum value equal to the second session deficit difference value and the second session deficit value.

In some embodiments, the selecting one of the first UWB session or the second UWB with the higher credit value comprises: selecting one of the first UWB session and the second UWB with a higher deficit sum value; and updating a respective session deficit value of the selected UWB session by subtracting a ranging round duration.

In some embodiments, the method further includes: determining a respective round begin time of the first UWB session and the second UWB session; determining a non-selected UWB session overlapping with the selected UWB session and having the respective round begin time earlier than a round end time of the selected UWB session; updating a respective session deficit value of the non-selected UWB session by adding the respective session deficit difference value; and perform access with the selected session.

Embodiments of the present disclosure provides a method for determining a set of colliding UWB sessions. The method includes: determining respective round begin times and respective round end times of a plurality of UWB sessions in an out-window queue; determining a UWB session with an earlier round begin time in the out-window queue as a first in-window session in an in-window queue, and another UWB session with a later round begin time in the out-window queue as a first out-window session in the out-window queue; and determining a window period with a window begin time and a window end time later than the window begin time, the window end time being equal to a round end time of the first in-window session.

In some embodiments, the method further includes determining whether the out-window queue is empty. In some embodiments, in response to the out-window queue not being empty, the method further includes updating the window end time to be a minimum of the round end time of the first in-window session or a round begin time of the first out-window session.

In some embodiments, the method further includes computing access time of a respective UWB session using the respective priority value and a priority sum value including a sum of all priority values of the UWB sessions in the window period.

In some embodiments, the method further includes, after the updating of the window end time, computing an access time of a respective UWB session using the respective priority value and a priority sum value including a sum of all priority values of the UWB sessions in the window period.

In some embodiments, the method further includes, in response to the in-window queue not empty, the out-window queue not empty, and the round begin time of the first out-window session being equal to the window end time; adding the first out-window session to the in-window session as a second in-window session; determining a second out-window session to be a new first out-window session; and updating an in-window priority sum by including a priority value of the second in-window.

In some embodiments, the method further includes: in response to the in-window queue empty, the out-window queue empty, or the round begin time of the first out-window session being different from the window end time, updating the window begin time to the previous window end time; and determining whether the in-window queue is empty.

In some embodiments, the method further includes: in response to the in-window queue not being empty, updating the window end time to the round end time of the first in-window session; determining whether the out-window queue is empty; and in response to the out-window queue not being empty, updating the window end time to be a minimum of the round end time of the first in-window session or an round begin time of the new first out-window session.

In some embodiments, the method further includes: in response to the in-window queue not empty and the round begin time of the first in-window session being equal to the window end time: subtracting a priority value of the first in-window session from the priority sum value; updating the set of collision sets to include the first in-window session; and determining the second in-window session to be a new first in-window session.

Embodiments of the present disclosure provide a UWB device. The UWB device includes a transceiver operable to perform a UWB communication, a memory for storing program instructions, device information of a plurality of devices, round begin times and round end times of the plurality of UWB sessions, and computed access times for one or more of the plurality of devices, and a processor coupled to the transceiver and to the memory. The processor is operable to execute the program instructions. When executed by the processor, the UWB device performs the following operations to schedule communication of the plurality of devices. The operations include: determining a set of colliding UWB sessions that comprises a first UWB session and a second UWB session partially overlaps with each other in time; computing a first access time of the first UWB session and a second access time of the second UWB session; determining a first credit value based at least on the first access time and a second credit value based at least one the second access time; and selecting one of the first UWB session or the second UWB with a higher credit value.

In some embodiments, the determining of the first credit value comprises computing a first session deficit value of the first UWB session based on the first access time and a previous first session deficit value; and the determining of the second credit value comprises computing a second session deficit value of the second UWB session based on the second access time and a previous second session deficit value.

In some embodiments, the method further includes: selecting one of the first UWB session and the second UWB with a higher deficit value; updating a respective session deficit value of the selected UWB session by subtracting a round duration of the selected UWB session; and perform access with the selected session.

In some embodiments, the computing of the first access time of the first UWB session and the second access of the second UWB session comprises: determining a time period in which the first UWB session overlaps with the second UWB session; determining a priority sum value including a sum of a first priority value of the first UWB session and a second priority value of the second UWB session; computing a first shared time proportional to a length of the time period and a first priority value of the first UWB session, and inversely proportional to the priority sum value; and computing a second shared time proportional to the length of the time period and a second priority value of the second UWB session, and inversely proportional to the priority sum value.

In some embodiments, the computing of the first access time comprises adding the first shared time with a duration of the first UWB session that is non-overlapping with the second UWB session; and the computing of the second access time comprises adding the second shared time with a duration of the second UWB session that is non-overlapping with the first UWB session.

In some embodiments, the computing of the first access time of the first UWB session and the second access of the second UWB session comprises: determining a priority sum value including a sum of priority values of all colliding UWB sessions; computing the first access time proportional to a duration of the first UWB session and a first priority value of the first UWB session, and inversely proportional to the priority sum value; and computing the second access time proportional to a duration of the second UWB session and a second priority value of the second UWB session, and inversely proportional to the priority sum value.

In some embodiments, the method further includes: computing a first session deficit difference value of the first UWB session to be equal to the first access time; and computing a second session deficit difference value of the second UWB session to be equal to the second access time.

In some embodiments, the determining of the first credit value comprises determining a first deficit sum value equal to the first session deficit difference value and the first session deficit value; and the determining of the second credit value comprises determining a second deficit sum value equal to the second session deficit difference value and the second session deficit value.

In some embodiments, the selecting one of the first UWB session or the second UWB with the higher credit value comprises: selecting one of the first UWB session and the second UWB with a higher deficit sum value; and updating a respective session deficit value of the selected UWB session by subtracting a ranging round duration.

In some embodiments, the method further includes: determining a respective round begin time of the first UWB session and the second UWB session; determining a non-selected UWB session overlapping with the selected UWB session and having the respective round begin time earlier than an round end time of the selected UWB session; updating a respective session deficit value of the non-selected UWB session by adding the respective session deficit difference value; and perform access with the selected session.

Embodiments of the present disclosure provide a UWB device. The UWB device includes a transceiver operable to perform a UWB communication, a memory for storing program instructions, device information of a plurality of devices, round begin times and round end times of a plurality of UWB sessions, a window begin time and a window end time of a window period, and a processor coupled to the transceiver and to the memory. The processor is operable to execute the program instructions. When executed by the processor, the UWB device performs the following operations to detect a set of colliding UWB sessions. The operations include: determining respective round begin times and respective round end times of a plurality of UWB sessions in an out-window queue; determining a UWB session with an earlier round begin time in the out-window queue as a first in-window session in an in-window queue, and another UWB session with a later round begin time in the out-window queue as a first out-window session in the out-window queue; and determining a window period with a window begin time and a window end time later than the window begin time, the window end time being equal to a round end time of the first in-window session.

In some embodiments, the method further includes determining whether the out-window queue is empty. In some embodiments, in response to the out-window queue not being empty, the method further includes updating the window end time to be a minimum of the round end time of the first in-window session or a round begin time of the first out-window session.

In some embodiments, the further includes, in response to the out-window queue being empty, computing access time of a respective UWB session using the respective priority value and a priority sum value including a sum of all priority values of the UWB sessions in the window period.

In some embodiments, the method further includes, after the updating of the window end time, computing an access time of a respective UWB session using the respective priority value and a priority sum value including a sum of all priority values of the UWB sessions in the window period.

In some embodiments, the method further includes, in response to the in-window queue not empty, the out-window queue not empty, and the round begin time of the first out-window session being equal to the window end time; adding the first out-window session to the in-window session as a second in-window session; determining a second out-window session to be a new first out-window session; and updating an in-window priority sum by including a priority value of the second in-window.

In some embodiments, the method further includes: in response to the in-window queue empty, the out-window queue empty, or the round begin time of the first out-window session being different from the window end time, updating the window begin time to the previous window end time; and determining whether the in-window queue is empty.

In some embodiments, the method further includes: in response to the in-window queue not being empty, updating the window end time to the round end time of the first in-window session; determining whether the out-window queue is empty; and in response to the out-window queue not being empty, updating the window end time to be a minimum of the round end time of the first in-window session or an round begin time of the new first out-window session.

In some embodiments, the method further includes: in response to the in-window queue not empty and the round begin time of the first in-window session being equal to the window end time: subtracting a priority value of the first in-window session from the priority sum value; updating the set of collision sets to include the first in-window session; and determining the second in-window session to be a new first in-window session.

Those skilled in the art will appreciate the scope of the present disclosure and realize additional aspects thereof after reading the following detailed description of illustrative embodiments in association with the accompanying drawing figures.

## BRIEF DESCRIPTION OF THE DRAWING FIGURES

The accompanying drawing figures incorporated in and forming a part of this specification illustrate several aspects of the disclosure, and together with the description, serve to explain the principles of the disclosure.

FIG. 1A illustrates an example UWB communication system having a plurality of UWB devices, according to some aspects of the present disclosure.
FIG. 1B illustrates an example block diagram of a UWB scheduler, according to some aspects of the present disclosure.
FIG. 1C illustrates collisions between two UWB sessions, according to some aspects of the present disclosure.
FIGS. 2A-2C each shows a flowchart of an example process for computing an access time in a collision, according to some aspects of the present disclosure.
FIGS. 3A and 3B each shows a flowchart of an example process for scheduling a UWB session, according to some aspects of the present disclosure.
FIGS. 4A and 4B illustrate a flowchart an example process for detecting a collision between UWB sessions, according to some aspects of the present disclosure.
FIGS. 4C and 4D illustrate the example process for detecting a collision between UWB sessions, according to some aspects of the present disclosure.
FIG. 5A illustrates a flowchart of an example process for scheduling a UWB session, according to some aspects of the present disclosure.
FIG. 5B illustrates a flowchart of an example process for detecting a set of colliding UWB sessions, according to some aspects of the present disclosure.
FIGS. 6A and 6B illustrate simulation results of scheduling of UWB sessions using an example process of the present disclosure, according to some aspects of the present disclosure.

## DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

Hereinafter, embodiments are described in detail with reference to the accompanying drawings. Further, although a communication system using ultra-wideband (UWB) is described in connection with embodiments, as an example, the embodiments may also apply to other communication systems with similar technical background or features. For example, a communication system using Bluetooth or ZigBee may be included therein. Further, embodiments may be modified in such a range as not to significantly depart from the scope of the present disclosure under the determination by one of ordinary skill in the art and such modifications may be applicable to other communication systems.

UWB may refer to a short-range high-rate wireless communication technology using a wide frequency band of several hundreds of MHz to several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known, also referred to as anchors or anchor devices). The present disclosure assumes that the user is carrying a device capable of communicating through UWB (referred to as "UWB-enabled user device" or simply user device).

As used herein, a "slot," a "ranging round," a "period," a "session," a "UWB session," and a "block" each refers to a time period. A ranging round may include a plurality of slots or a plurality of periods, a session may include one or more blocks, and a block may include one or more ranging rounds. As used herein, "a session" and "a UWB session" are interchangeable. As used herein, a priority value of a UWB session is also referred to as a weight of the UWB session in various computations of this disclosure.

As used herein, a controller device refers to the suitable hardware and/or software, e.g., a processor and corresponding instructions, that performs/initiates the UWB coordination, scheduling, computation, and/or other UWB communication operations. A controlee devices listens to and responds to the controller device. A UWB device, e.g., an electronic device capable of UWB functions, that functions as a controller device in some UWB sessions may function as a controlee device in some other UWB sessions.

As used herein, a round begin time refers to the begin time of a ranging round in a UWB session, and a round end time refers to the end time of a ranging round in a UWB session. A round begin time of a UWB session refers to the begin time of the first ranging round in the UWB session, and a round end time of a UWB session refers to the end time of the last ranging round in the UWB session.

In existing protocols, e.g., the FiRa specification, a "priority" parameter or priority value between 1 and 100, is defined and assigned to a UWB session to indicate the urgency/importance of the UWB session. A higher priority value indicates a higher urgency/importance, and vice versa. A UWB system (or UWBS), e.g., embedded in a mobile device such as a mobile phone, may schedule ranging for UWB sessions based on their priority values. In an existing scheduling method, the UWBS schedules a UWB session using the priority value as a "hard priority." For example, in case of a collision, the session with the higher/highest priority is often granted access to the medium. As a result, when two UWB sessions overlap in the same block duration, the session with the lower priority value is often deferred access, leading to starvation.

Embodiments of the present disclosure provide a system and methods for scheduling UWB sessions by a UWB scheduler. The methods of the present disclosure take into account of the loss of access for a UWB session as a result of its lower priority value using a credit value, and allow access of the low-priority UWB session when its credit value is sufficiently high. For example, a UWB scheduler updates the credit value of a UWB parameter based on its selection status in a collision for each block duration. When the UWB session is selected to access the medium, the UWB scheduler decreases the session deficit value of the UWB session. The session deficit value is updated based at least on a computed access time of the UWB session, which is computed based on the priority value of the UWB session. Different ways to compute the access time of a UWB session based on its priority value are provided. The computed access time is compared to the access time computed based on an ideal scheduling to evaluate its fairness on UWB sessions of different priority values. Using the methods to compute access time and schedule UWB sessions of different priorities, UWB sessions of lower priorities can have a higher chance of accessing the medium, the scheduling is more "fair" compared to the existing scheduling methods, and starvation is less likely to happen. As another aspect of the present disclosure, a method to detect collision between UWB sessions is provided.

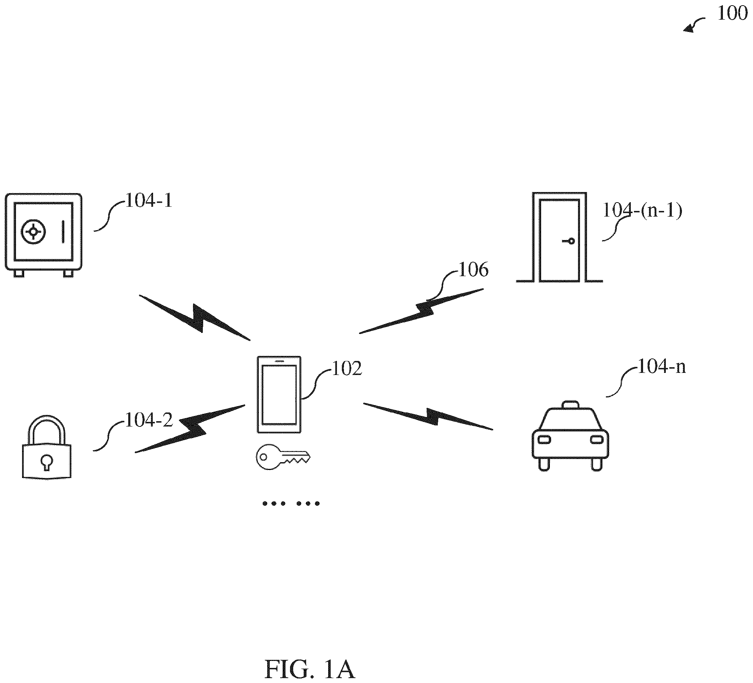

FIG. 1A illustrates an example UWB communication system 100, according to some embodiments of the present disclosure. UWB communication system 100 may include a first device 102 and one or more second devices 104-1, 104-2, ..., 104-(n-1), and 104-n, n being a positive number. In some embodiments, first device 102 is a controller device, and second devices 104-1, ..., 104-n are controlee devices. In some embodiments, first device 102 is a controlee device. In other words, methods of the present disclosure can be performed by either a controller device or a controlee device in a cluster of UWB devices. First device 102 may communicate with second devices 104-1, ... 104-n through communication link 106, and may function as a scheduler that schedules the access to the medium for different UWB sessions. Each of the first device 102 and the second devices 104-1, ... 104-n may be equipped with UWB capabilities such that first device 102 can perform ranging with each of the second devices 104-1, ..., 104-n. In some embodiments, first device 102 and second devices 104-1, ..., 104-n may each transmit RF signals in one or more wireless communication protocols such as UWB, WiFi, Bluetooth, NFC, or the like. In some embodiments, first device 102 may measure a distance from a second device based on ranging with the second device in a UWB session allocated to the second device and determines its next operation based on the distance. For example, first device 102 may function as a key that can unlock a second device when the distance is sufficiently small. Examples of first device 102 can include a portable/wearable electronic device such as a mobile phone, a tablet, a pair of goggles, a computing device, a personal digital assistant (PDA), or any other suitable devices with wireless connection capability. Examples of second devices 104-1, ..., 104-n can include a safe, a digital lock, a door, a gate, a car, or any other digital device that can perform ranging with first device 102, and execute operations (such as unlocking) based on messages transmitted from first device 102 in a UWB session allocated to the second device.

First device 102 may range with one or more second devices 104-1, ..., 104-n and determine the distance between itself and each of the one or more second devices 104-1, ..., 104-n. In some embodiments, when first device 102 determines a distance is below a predetermined threshold distance d0, first device 102 transmits a message to the respective second device. The communication between first device 102 and respective second devices 104-1, ..., 104-n are performed in respective UWB sessions allocated to the respective second device. For example, the communication from first device 102 may include a user credential that enables authentication of control device 102, a request to the second device to automatically unlock itself, or a request to the second device to automatically performs any other suitable operations upon receiving the control message. In an example, a car can start automatically, a garage door can automatically open, etc. In some embodiments, first device 102 is sufficiently close to more than one second device, and is configured to communicate with more than one second devices in more than one UWB sessions that may overlap (e.g., collide) in time.

As previously mentioned, control device 102 may be configured to schedule the access of UWB sessions based on their priority values, which may be known to control device 102. In some embodiments, first device 102 obtains the priority values of second devices 104-1, ..., 104-n from prior communication, e.g., out-of-band (OOB) characterization prior to ranging. In some embodiments, first device 102 is pre-stored with priority values of second devices 104-1, ..., 104-n. First device 102 may schedule the access of the more than one UWB session based on their priority values. In an existing scheduling method, if a collision occurs between two UWB sessions, first device 102 may allow access of the UWB session of a higher priority value, and defer access of the UWB session of a lower priority value.

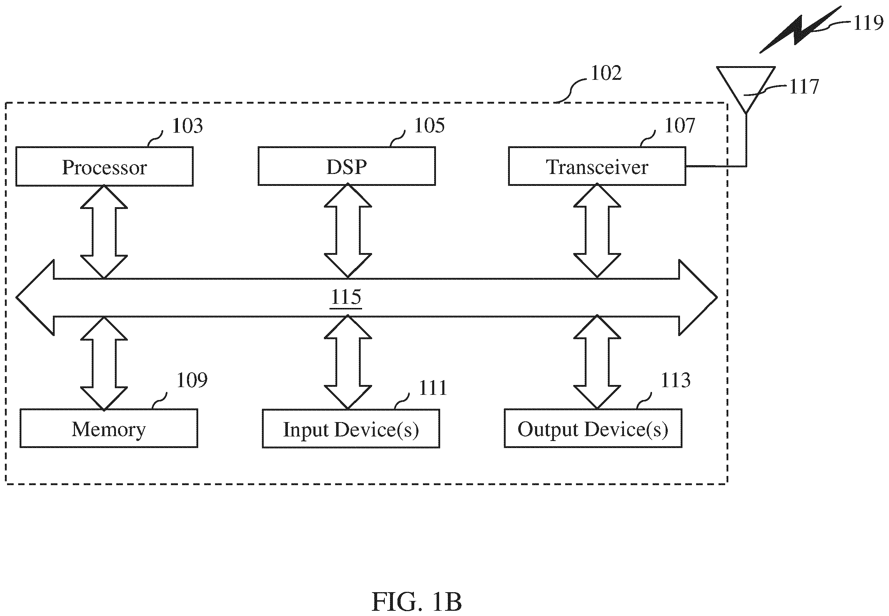

FIG. 1B illustrates an example of a first device 102, e.g., a mobile phone. First device 102 may be in the form of a cellular telephone, a smartphone, a laptop computer, a tablet, a personal digital assistant (PDA), a computing device, or any other mobile device having wireless connection capability. In some embodiments, first device 102 includes a processor 103, a digital signal processor (DSP) 105, a transceiver 107, an antenna 117, a memory 109, an input device 111, an output device 113, and a bus 115. The hardware components of first device 102 may be communicatively coupled to bus 115. In some embodiments, bus 115 can be used for processor 103 to communicate between cores and/or with memory 109. Processor 103 may include one or more general-purpose processors and/or one or more special-purpose processors (such as digital signal processing chips, graphics acceleration processors, and/or the like). Processor 103 may process wireless signals 119 received by transceiver 107, such as ranging signals, and/or data from UWB communication. Input device 111 may include a camera, a mouse, a keyboard, a touch sensitive screen/display, a touch pad, a keypad, and/or the like. An output device 113 may include a display, a printer, and/or the like. In some embodiments, a user may load one or more unlock applications, which automatically unlocks one or more second devices if the distance to the respective second device is sufficiently small.

First device 102 may include a transceiver 107 communicatively coupled to bus 115. Transceiver 107 may be operable to transmit and receive wireless signals 119 via antenna 117. Wireless signals 119 may be transmitted/received via a wireless network, although not shown in this figure. In some embodiments, the wireless network may be any wireless network such as a local wireless network, such as WiFi, a Personal Access Network (PAN), such as Matter, Bluetooth® or Zigbee®, or a cellular network (e.g., 4G, 5G). Transceiver 107 may be configured to receive wireless signals 119 via antenna 117 from a network control device (e.g., a gateway, a router, etc.), a cloud network, a satellite, and/or the like. For example, transceiver 107 may transmit ranging signals to a second device and/or receive a ranging signal from a second device. First device 102 may also be configured to decode and/or decrypt, via the DSP 105 and/or processor 103, various signals received by antenna 117.

Memory 109 may include one or more non-transitory storage devices that can include local and/or network accessible storage, a disk drive, a drive array, an optical storage device, a solid-state storage device such as a random access memory ("RAM") and/or a read-only memory ("ROM"), a programmable ROM, a flash-updateable ROM, and/or the like. Such storage devices may be configured to implement any appropriate data storage, including without limitation, various file systems, database structures, and/or the like. In some embodiments, memory 109 includes a device database, including device information (e.g., unique device identification (ID), device keys, priority values, round begin times and round end times of a plurality of UWB sessions, vendor information, device type, etc.) of first device 102 and/or one or more of second devices 104-1, ..., 104-n. In some embodiments, memory 109 is also stored with key derivation function (KDF) and scrambled timestamp sequence (STS) used for ranging.

In various embodiments, functions/operations may be stored as one or more instructions or code in memory 109, such as on a computer-readable storage medium, such as RAM, ROM, FLASH, or disc drive, and executed by processor 103 or DSP 105. Such instructions or code may be received via a computer-readable transmission medium (such as a signal or carrier wave) configured to convey the instructions or code. Such a computer-readable transmission medium may be received via transceiver 107. First device 102 may also include software components (e.g., located within memory 109), including, for example, an operating system, device drivers, executable libraries, and/or other executable code, such as one or more application programs. The application programs may include computer programs, stored in memory 109, executed by processor 103 and/or DSP 105 to implement various functions under the control of the operating system. The computer programs may have been pre-packaged with first device 102 or may have been downloaded by a user into memory 109 of the first device 102. Some mobile applications may be more user-interactive applications, such as an application to prompt a first device 102 to unlock one or more second devices 104-1, ..., 104-n, whereas some other mobile applications may be less user-interactive in nature, such as an application that schedules one or more UWB sessions and automatically ranges with one or more second devices 104-1, ..., 104-n in the one or more UWB sessions to determine their distances to first device 102.

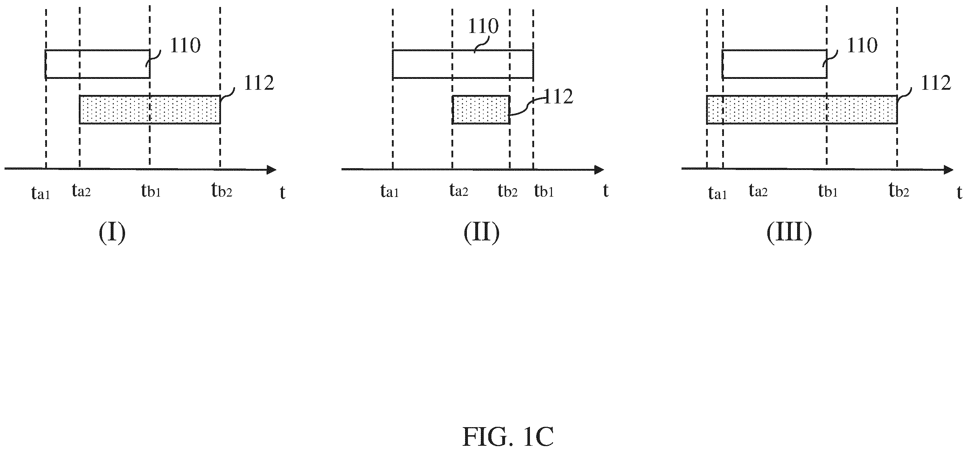

FIG. 1C illustrates scenarios of collisions between UWB sessions 110 and 112, according to some embodiments of the present disclosure. In operation, each UWB session is allocated a plurality of ranging rounds, each including one or more slots. UWB session 110 may be allocated for first device 102 to conduct communication with one of second devices 104-1, ..., 104-n, and UWB session 112 may be allocated for first device 102 to conduct communication with another one of second devices 104-1, ..., 104-n. As shown in (I)-(III) of FIG. 1C, UWB session 110 has a round begin time $t_{a1}$ and a round end time $t_{b1}$, and UWB session 112 has a round begin time $t_{a2}$ and a round end time $t_{b2}$. In a collision, UWB session 110 may overlap with at least part of UWB session 112 such that $t_{a2}$ starts prior to $t_{b1}$. In various

embodiments, $t_{a2}$ can be smaller than, equal to, or greater than $t_{a1}$, and $t_{b2}$ can be smaller than, equal to, or greater than $t_{b1}$. In various embodiments, UWB sessions 110 and 112 may have the same or different priority values.

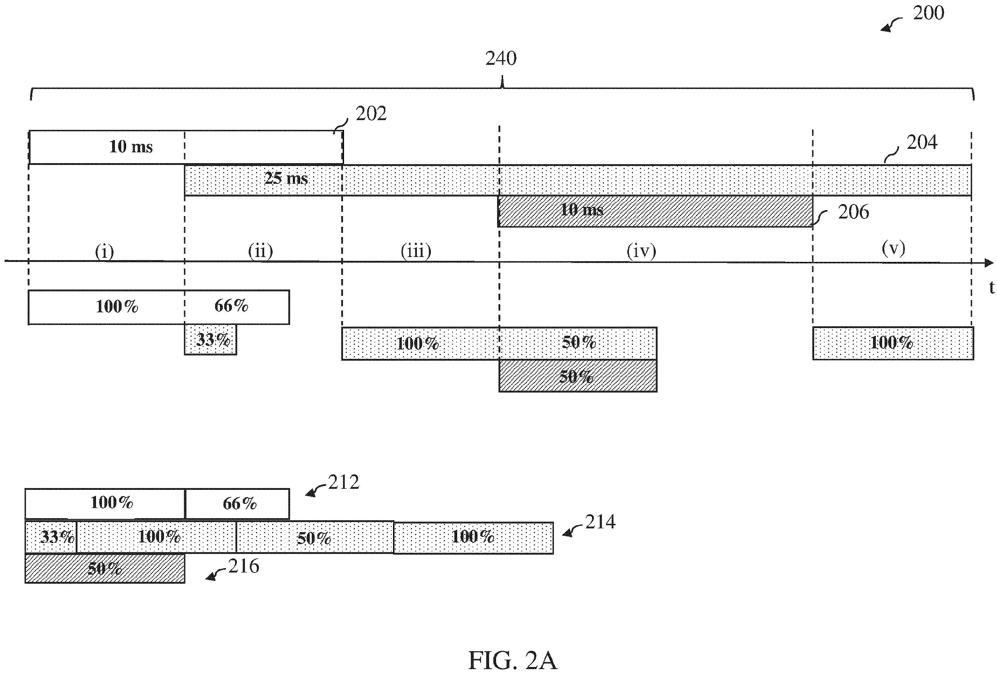

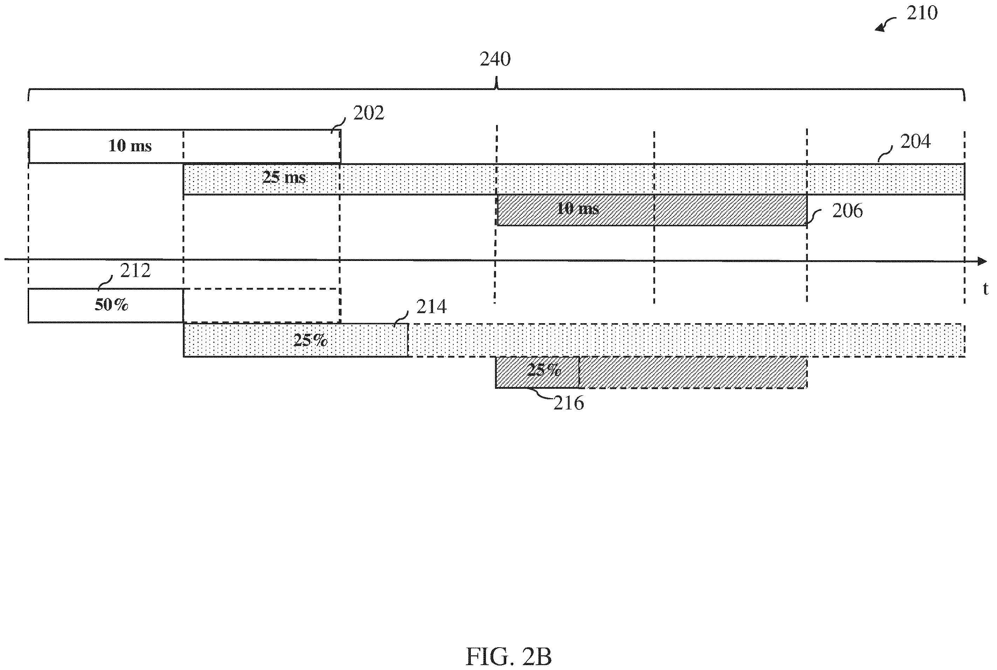

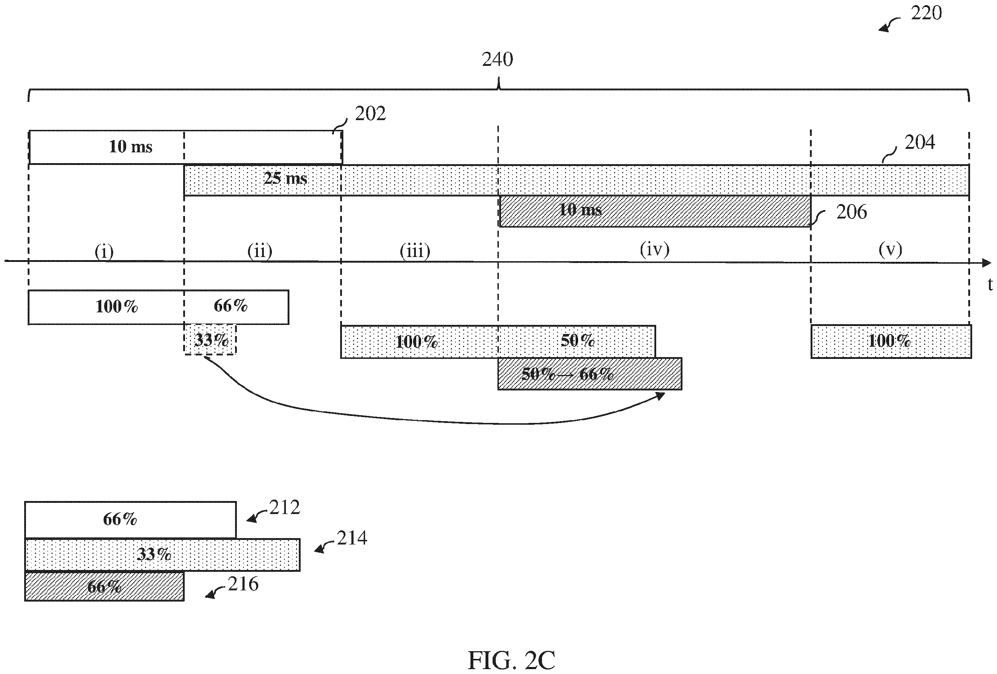

FIGS. 2A, 2B, and 2C illustrate various methods 200, 210, and 220 to compute access times for UWB sessions in a collision by a UWB scheduler (e.g., first device 102), according to embodiments of the present disclosure. The access times computed using methods 200, 210, and/or 220 may later be used in methods 300 and/or 301 to schedule access to the medium for all UWB sessions based on their session deficit values (e.g., "credit values") such that the access time can be more fairly (or evenly) distributed to all UWB sessions over time. Instead of an "all or nothing" situation in an existing scheduling process, the scheduling of UWB sessions based on the computed access time (e.g., computed using methods 200, 210, and 220) may allow more or all colliding UWB sessions with lower priority values to access the medium.

The computed access times can then be used, by the UWB scheduler, in the scheduling (method 300 or 301) of the UWB sessions for the computation of a session deficit value, which functions as a credit mechanism that increases when a UWB session is not selected for access the medium. Thus, a UWB session with a lower priority value, may have accumulated a higher session deficit value after not being selected for access, and may be more likely to be selected for the next access. Thus, the medium can be more fairly shared by UWB sessions of different priority values.

In some embodiments, the computed access time (using each of methods 200, 210, and 220) reflects the ideal average access time each colliding UWB session is permitted over a reasonably long time, e.g., tens of hundreds of block durations. Methods 200, 210, and 220 may each be referred to as "generalized processor sharing" or GPS, which computes the ideal sharing of different UWB sessions based on their priority values (e.g., weights) and duration in a collision set, and can be used to evaluate how fair a scheduling method (e.g., 300) is. The actual average access time for a UWB session (e.g., the performed access time) over tens of hundreds of block durations, using scheduling method 300 or 301, may be sufficiently close to the ideal average access time computed using one of methods 200, 210, and 220. In various embodiments, the fairness of each of methods 200, 210, and 220 may be evaluated by how close the ideal average access time is to the actual average access time.

In the examples shown in FIGS. 2A-2C, it is assumed that UWB session 202 has a priority value of 100, UWB session 204 has a priority value of 50, and UWB session 206 has a priority value of 50. As an example, UWB session 202, 204, and 206 respectively has a duration of 10 ms, 25 ms, and 10 ms.

As shown in FIG. 2A, UWB sessions 202, 204, and 206 may be in a collision set, and may partially overlap with one another, causing one or more collisions. UWB sessions 202 and 204 may be in a collision, and UWB sessions 204 and 206 may be in a collision. Method 200, also referred to as a "fine granularity" method, may be used to compute the access time Ti of each UWB session as the accumulation of shared access times in a time period 240 occupied by the UWB sessions. As shown in FIG. 2A, time period 240, occupied by UWB sessions 202, 204, and 206, may be divided into a plurality of sub-periods (i), (ii), (iii), (iv), and (v). UWB session 202 may occupy sub-period (i) alone, UWB session 204 may occupy sub-periods (iii) and (v) alone, while UWB sessions 202 and 204 may have a collision in sub-period (ii) and UWB sessions 204 and 206 may have a collision in sub-period (iv). The UWB scheduler may utilize method 200 to compute the shared access time of each UWB session in each sub-period, and may add together the shared times of each UWB session to obtain the computed access time (or total access time) of each UWB session.

In some embodiments, the shared access time of UWB session i in a sub-period is computed as

$$\frac{duration\ of\ sub-period \times w_i}{sub-period\_weight\_sum}$$

, in which $w_i$ refers to the priority value (or weight value) of UWB session i, and sub-period_weight_sum refers to the sum of priority values in the sub-period. For example, in sub-period (i), shared access time of UWB session 202 is computed as 5×100/100=5 ms, accounting for 100% of the duration of sub-period (i) In sub-period (ii), shared access time of UWB session 202 is computed as 5×100/150=3.33 ms, accounting for 66% of the duration of sub-period (ii). Still in sub-period (ii), shared access time of UWB session 204 is computed as 5×50/150=1.66 ms, accounting for 33% of the duration of sub-period (ii). As shown in FIG. 2A, for sub-period (iii), UWB session 204 is computed to occupy 100% (e.g., 5 ms) of the duration (e.g., 5 ms) of sub-period (iii); for sub-period (iv), UWB sessions 204 and 206 each is computed to occupy 50% (e.g., 5 ms) of the duration of sub-period (e.g., 10 ms); for sub-period (v), UWB session 204 is computed to occupy 100% (e.g., 5 ms) of the duration (e.g., 5 ms) of sub-period (v).

As shown in FIG. 2A, computed access time 212 of UWB session 202 may be the sum of its shared access times in sub-periods (i) and (ii); computed access time 214 of UWB session 204 may be the sum of its shared access times in sub-periods (ii), (iii), (iv) and (v); and computed access time 216 of UWB session 206 may be the sum of its shared access times in sub-period (iv). Thus, computed access time 212 ($T_1$) for UWB session 202 is equal to 8.33 ms, computed access time 214 ($T_2$) for UWB session 204 is equal to 16.66 ms, and computed access time 216 ($T_3$) for UWB session 206 is equal to 5 ms.

FIG. 2B shows another method 210 to compute the access time of each UWB session in a collision, according to some embodiments. In this disclosure, method 210 is also referred to as "colliding set granularity" method. In some embodiments, the access time $T_i$ of a UWB session $i$ is computed as $\frac{w_i r_i}{\Sigma w_k}$, where $w_i$ refers to the priority value of UWB session $i$, $r_i$ refers to the round duration of UWB session $i$, and $\Sigma w_k$ refers to the sum of priority values of all UWB sessions in a collision set.

For example, the computed access time 212 ($T_1$) of UWB session 202 may be computed as 100x 10/200=5 ms, accounting for 50% of the duration of UWB session 202; the computed access time 214 ($T_2$) of UWB session 204 may be computed as 50×25/200=6.25 ms, accounting for 25% of the duration of UWB session 204; and the computed access time 216 ($T_3$) of UWB session 206 may be computed as 50×10/200=2.5 ms, accounting for 25% of the duration of UWB session 206.

FIG. 2C shows another method 220 to compute the access time of each UWB session in a collision, according to some embodiments. Using method 220, sharing is done according to the priority values of the UWB sessions, using the actual colliding sessions for each sub-period of the colliding set, and the minimal shared time may be used for the entire colliding set. As shown in FIG. 2C, in sub-period (iv), UWB sessions 204 and 206 may each be given 50% of the available time (duration) of sub-period (iv), but UWB session 204 may be deferred to UWB session 202 earlier and therefore not use the 33% shared access time of sub-period (ii). To account for this, UWB session 202 may be given 66% of its duration as the computed access time ($T_1$=6.66 ms), UWB session 204 may be given only 33% of its duration as the computed access time ($T_2$=8.33 ms), and UWB session 206 may be given 66% of its duration as the computed access time ($T_3$=6.66 ms).

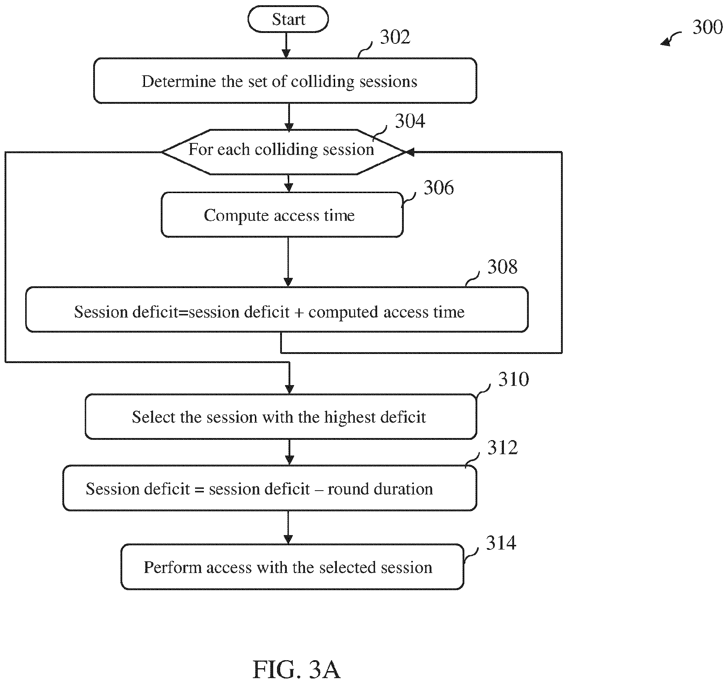

FIG. 3A illustrates a flowchart of a process 300 for scheduling UWB sessions by a UWB scheduler (e.g., first device 102), according to some embodiments of the present disclosure. Process 300 utilizes the computed access time obtained from GPS (e.g., the ideal sharing of UWB sessions) and takes into account the session deficit value (e.g., a credit value) of a UWB session, which accumulates when the UWB session is not selected for access and decreases when selected for access. A UWB session with a lower priority value is thus more likely to be selected for access, and the allocation of access time thus has improved fairness. Method 300 is merely an example, and is not intended to limit the present disclosure beyond what is explicitly recited in the claims. Additional operations can be provided before, during, and after the method 300, and some operations described can be replaced, eliminated, or moved around for additional embodiments of method 300. For ease of illustration, FIG. 3A is described in connection with FIGS. 2A-2C. In some embodiments, method 300 is performed after each performed access, and repeats to prepare the next access to perform. In some embodiments, method 300 proceeds back to step 302 after step 314.

In some embodiments, an initialization step is performed prior to step 302 when controller 102 starts scheduling for the first block duration. Controller 102 may initialize the values of certain parameters. For example, the session deficit value of each UWB session may have an initial value of 0, and the computed access time of each UWB session may have an initial value of 0, etc. In some embodiments, for each UWB session, the session deficit value from a previous block duration is updated in the next block duration.

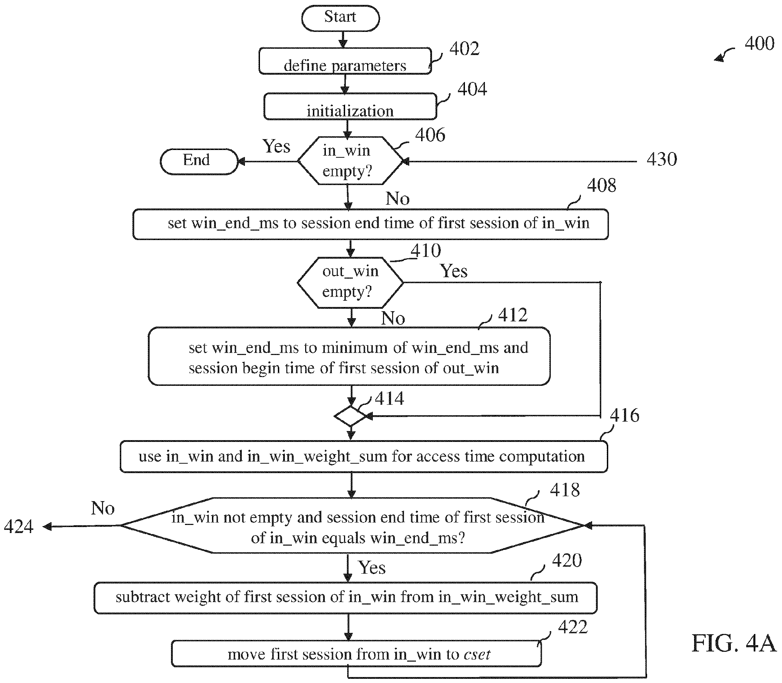

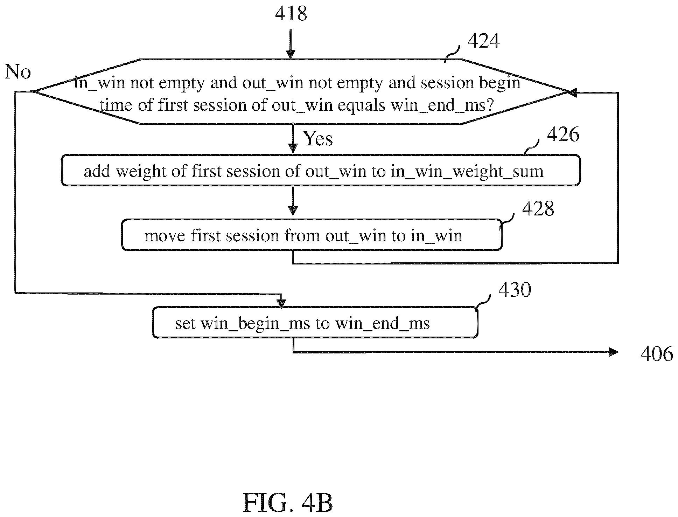

At step 302, the UWB scheduler determines the set of colliding sessions. In some embodiments, the UWB scheduler may determine the set of colliding sessions that includes UWB session 202, 204, and 206. The method to detect the set of colliding sessions is described in FIGS. 4A and 4B.

At step 304, the UWB scheduler starts a loop to compute the session deficit value for each UWB session in the colliding set.

At step 306, the UWB scheduler computes the access time for a UWB session in the colliding set. In some embodiments, the UWB scheduler may compute the access time using any one of methods 200, 210, and 220 to obtain the computed access time for the UWB session. For example, the UWB scheduler may compute the access time for UWB sessions 202, 204, and 206 in a colliding set shown in FIGS. 2A-2C.

At step 308, the UWB scheduler computes a session deficit value for the UWB session. In some embodiments, the UWB scheduler computes/updates the session deficit value of the UWB by adding the computed access time to the existing/current session deficit value.

The UWB scheduler may complete the loop for each UWB session and obtain a session deficit value for each UWB session in the colliding set. For example, the UWB scheduler may compute the session deficit values for UWB sessions 202, 204, and 206. Method 300 may then proceed to step 310, at which the UWB scheduler select the UWB session with the highest deficit value. In some embodiments, the UWB scheduler selects the UWB session with the highest session deficit value to access the medium.

At step 312, the UWB scheduler reduces the session deficit value of the selected UWB session. In some embodiments, the UWB scheduler computes/updates the session deficit value by subtracting the round duration of the selected UWB session from the existing/current session deficit value of the selected UWB session.

At step 314, the UWB scheduler performs access with the selected session. In some embodiments, controller 102 performs access with the selected UWB session such that the selected UWB session access the medium in the current block duration. The performed access time is the actual access time of the selected UWB session. In some embodiments, the UWB scheduler starts from step 302 for the next block duration, and update the session deficit value obtained from the previous block duration. In some embodiments, method 300 proceeds to step 302 after performing step 314.

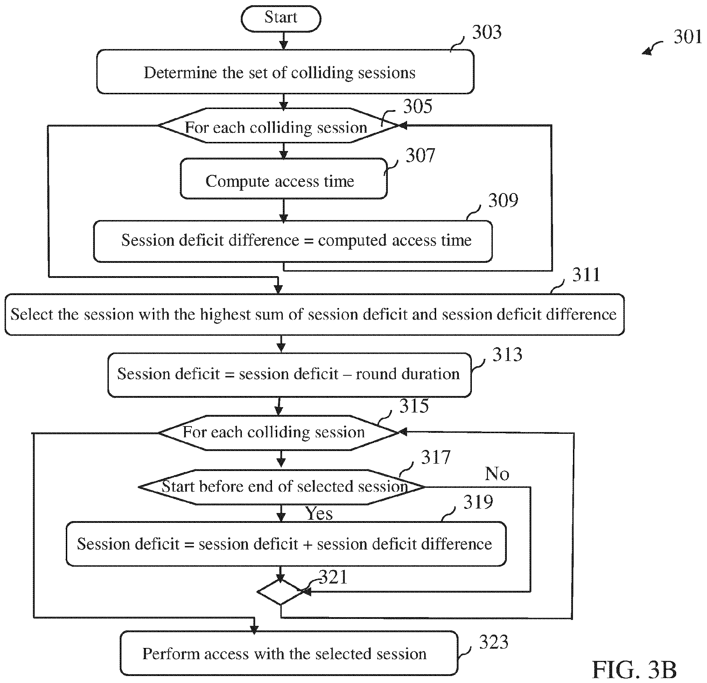

FIG. 3B illustrates a flowchart of a process 301 for scheduling UWB sessions by the UWB scheduler, according to some embodiments of the present disclosure. Different from process 300, method 301 allows a UWB session colliding with the selected UWB session to have a higher chance of being selected for access in future block durations. Method computes a sum of session deficit value and session deficit difference value (e.g., a credit value) of each UWB session as the basis for selection. Method 301 is merely an example, and is not intended to limit the present disclosure beyond what is explicitly recited in the claims. Additional operations can be provided before, during, and after the method 301, and some operations described can be replaced, eliminated, or moved around for additional embodiments of method 301. For ease of illustration, FIG. 3B is described in connection with FIGS. 2A-2C.

In some embodiments, an initialization step is performed prior to step 303 when controller 102 starts scheduling for the first block duration. Controller 102 may initialize the values of certain parameters. For example, the session deficit value of each UWB session may have an initial value of 0, the session deficit difference value of each UWB session may have an initial value of 0, the sum of session deficit difference value and session deficit value may have an initial value of 0, and the computed access time of each UWB session may have an initial value of 0, etc. In some embodiments, for each UWB session, the session deficit value and the session deficit difference value from a previous block duration is updated in the next block duration.

At step 303, the UWB scheduler determines the set of colliding sessions. In some embodiments, the UWB scheduler may determine the set of colliding sessions that includes UWB session 202, 204, and 206.

At step 305, the UWB scheduler starts a loop to compute the session deficit difference value for each UWB session in the colliding set.

At step 307, the UWB scheduler computes the access time for a UWB session in the colliding set. In some embodiments, the UWB scheduler may compute the access time using any one of methods 200, 210, and 220 to obtain the computed access time for the UWB session. For example, the UWB scheduler may compute the access time for UWB sessions 202, 204, and 206 in a colliding set shown in FIGS. 2A-2C.

At step 309, the UWB scheduler computes a session deficit difference value for the UWB session. In some embodiments, the UWB scheduler computes/updates the session deficit difference value of the UWB with the computed access time obtained in step 309. For example, the UWB scheduler may compute the session deficit difference values for UWB sessions 202, 204, and 206.

After the UWB scheduler completes the computation of session deficit difference values for each UWB session in the colliding set, method 301 proceeds to step 311, at which the UWB scheduler computes a sum of session deficit value and session deficit difference value for each UWB session, and selects the UWB session with the highest sum of session deficit value and session deficit difference value. In some embodiments, the UWB scheduler adds the session deficit difference value and the session deficit value of each UWB session in the colliding set, and selects the UWB session with the highest sum.

At step 313, the UWB scheduler reduces the session deficit value of the selected UWB session. In some embodiments, the UWB scheduler computes/updates the session deficit value of the selected UWB session by subtracting the round duration of the selected UWB session from the current UWB session. For example, if UWB session 202 is selected, round duration of 10 ms is subtracted from its session deficit value.

At step 315, the UWB scheduler starts a loop to compute the session deficit value of each UWB session that collides with the selected UWB session. For example, the UWB scheduler may compute the session deficit values for UWB sessions 202, 204, and 206.

At step 317, the UWB scheduler determines whether a UWB session starts before the end of the selected UWB session. In some embodiments, the UWB scheduler determines whether the round begin time of the UWB session is before the round end time of the selected UWB session, e.g., overlaps/collide with the selected UWB session. If yes, method 301 proceeds to step 319; and if no, method 301 proceeds to step 321.

At step 319, the UWB scheduler increases the session deficit value for the UWB session that overlaps with the selected UWB session. Referring back to FIG. 2A, assuming UWB session 202 is selected in step 311, the UWB scheduler may increase the session deficit value of UWB session 204 in step 319. In some embodiments, the UWB scheduler computes/updates the session deficit value of the UWB session by adding the session deficit difference value, computed in step 309, to the current session deficit value.

At step 321, the operations from steps 317 and 319 are directed to step 315 such that all UWB sessions in the colliding set are checked to determine if their session deficit values need to be updated/increased.

After completing the update of session deficit values for all UWB sessions in the colliding set, process 301 proceeds to step 323, at which the UWB scheduler performs access with the selected UWB session. The performed access time is the actual access time of the selected UWB session.

Method 300 updates the deficit of all UWB sessions in the colliding set. Method 301 only updates the deficit of sessions which round starts before the end of the selected UWB session. The "session deficit difference" of method 301 is computed to facilitate such updates in method 301. According to method 300, only one UWB session (e.g., with the highest session deficit value) is selected for access in the colliding set, and all other UWB sessions, even those do not collide with the selected UWB session, are prevented access in the block duration. Different from method 300, in method 301, only the UWB sessions that collide with the selected UWB session are prevented access in the block duration, and UWB sessions that do not collide with the selected UWB session can still access the medium. The UWB scheduler (e.g., first device 102) may prevent access of the UWB session colliding with the selected UWB session and increase the chance of access for the colliding UWB sessions by increasing its session deficit value (at step 319). Meanwhile, since the non-colliding UWB session can access the medium, the UWB scheduler does not increase its session deficit value.

Referring back to FIG. 2A, using method 300, the control device permits only one access per colliding set based on its session deficit value. For example, if UWB session 202 is selected, all other UWB sessions (e.g., UWB sessions 204 and 206) may have their session deficit values increased to account for their loss of access. Using method 301, if UWB session 202 is selected for access, UWB session 206 (not colliding with UWB session 202) is not prevented to access the medium, and therefore its session deficit value is not increased. In the next block duration, UWB session 206 is selected for access because it is the only one left in the colliding set. Method 301 thus allows more than one access per colliding set.

In various embodiments, other ways are used to enable more than one access per colliding set. For example, the UWB scheduler handles each possible access as if it was part of a different colliding set. This means that some UWB sessions may get "free" accesses, and are allowed to use more medium time. In another example, the UWB scheduler may use method 220 (e.g., the collision granularity method) to compute the access time and keep track of colliding set for past sessions access. This is more costly to implement, both for the access time computation and for session book-keeping.

In some embodiments, the UWB scheduler permits only one access per colliding set, using method 210 (e.g., the colliding set granularity method) to compute the access time. This uses less medium time than possible, but avoid giving a UWB session more time than planned.

In some embodiments, desynchronized UWB sessions try to a receive control frame from a UWB scheduler to resynchronize. This means that they need to listen to the medium as often as possible. When computing the colliding set, they should be handled differently so they do not extend the colliding set past the last synchronized UWB session. If one or several desynchronized UWB sessions are not selected, they may have their access requirement shortened to be able to listen to the medium before the colliding set. In that case another round of selection is done to determine which desynchronized UWB session will have access to the medium. Another option is to listen for all desynchronized UWB sessions at the same time, so desynchronized sessions do not need to content for the medium between them.

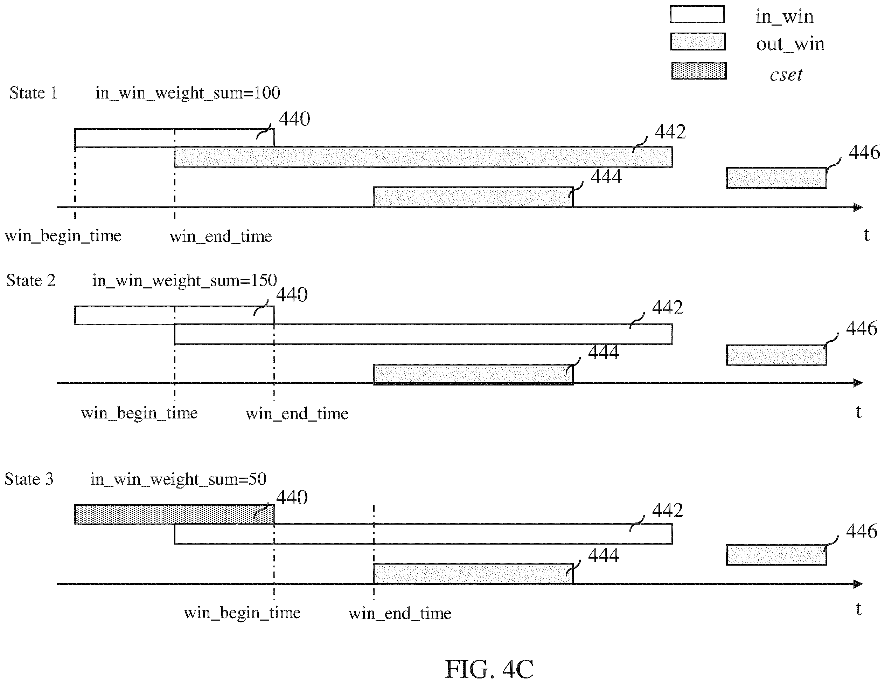

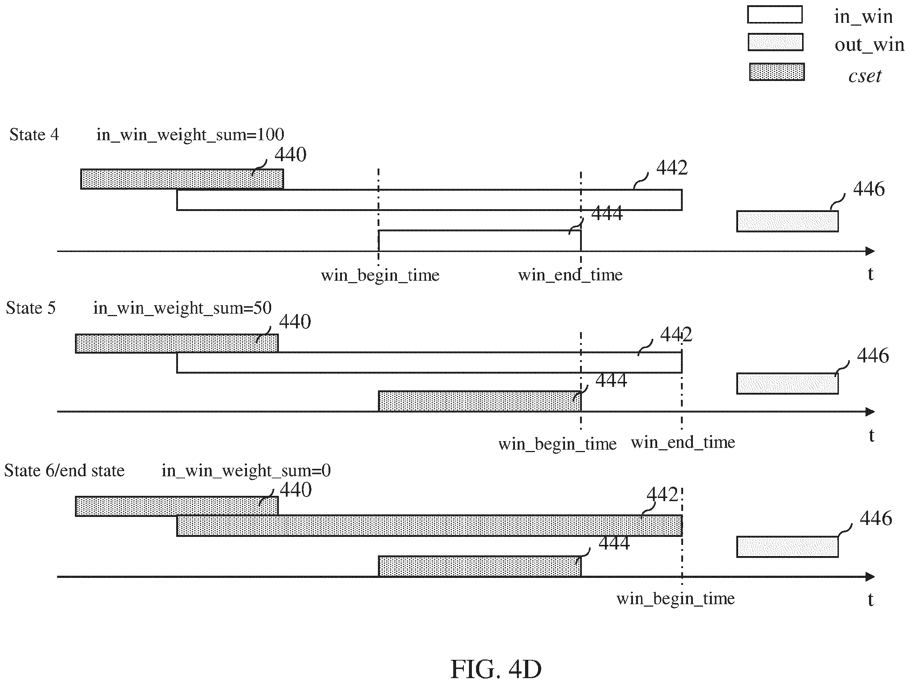

FIGS. 4A and 4B illustrate a method 400 for detecting a colliding set by a UWB scheduler (e.g., first device 102), according to some embodiments of the present disclosure. FIG. 4B is a continuation of FIG. 4A. FIGS. 4C and 4D show the corresponding process of method 400. Method 400 utilizes a rolling window (e.g., a window period) that includes a period of time to detect the relative positions of round end time and round begin time of UWB sessions, so as to determine if two UWB sessions collide with each other and them to the colliding set. Method 400 is merely an example, and is not intended to limit the present disclosure beyond what is explicitly recited in the claims. Additional operations can be provided before, during, and after the method 400, and some operations described can be replaced, eliminated, or moved around for additional embodiments of method 400. For ease of illustration, FIGS. 4A and 4B are described in connection with FIGS. 4C and 4D. As an example, a block duration with a plurality of UWB sessions 440, 442, 444, and 446 are shown as an example. The respective priority values (e.g., weight) of UWB sessions 440, 442, 444, and 446 are 100, 50, 50, and 50.

At step 402, the UWB scheduler defines parameters for the detection process. In some embodiments, the UWB scheduler defines: out_win as a priority queue of UWB sessions out of window, sorted by respective round begin times; in_win as a priority queue of UWB sessions in window, sorted by round end times; in_win_weight_sum as the sum of weight (priority values) of UWB sessions in window; win_begin_ms as the begin time of the window; win_end_ms as the end time of the window; and cset as the colliding set.

At step 404, the UWB schedulers initializes parameters for the detection process. In some embodiments, the UWB scheduler may add/include all active UWB sessions in out_win, move the first UWB session of out_win to in_win as the first UWB session of in_win, and initializes in_win_weight_sum with the weight (priority value) of the first session of in_win. As shown in FIG. 4C, at state 1, in_win_weight_sum is initialized to be 100. In some embodiments, at step 404, the UWB scheduler determines the round begin time and round end time of each UWB session in out_win. In some embodiments, the UWB scheduler also initializes win_begin_ms with the round begin time of the first UWB session of in_win.

As shown in FIG. 4C, the UWB scheduler may detect/determine the round begin time and round end time of each UWB session, and may move UWB sessions 440, 442, 444, and 446 to out_win. The UWB scheduler may then move UWB session 440 to in_win as the first UWB session of in_win. The UWB scheduler may initialize win_begin_ms with the round begin time of UWB session 440.

At step 406, UWB scheduler determines whether in_win is empty. If yes, method 400 proceeds to end; if no, method 400 proceeds to step 408, at which the UWB scheduler sets win_end_ms to round end time of first session of in_win. As shown in FIG. 4C, the UWB scheduler may set win_end_ms as the round end time of UWB session 404.

At step 410, the UWB scheduler determines whether out_win is empty. If yes, method 400 proceeds to step 414; if no, method 400 proceeds to step 412, at which the UWB scheduler set win_end_ms to the minimum of win_end_ms and round begin time of the first session of out_win. Referring to FIG. 4C, the UWB scheduler may set win_end_ms to the round begin time of UWB session 442. The win_begin_ms and win_end_ms are shown as dash-dotted lines in FIGS. 4C and 4D.

Method 400 then proceeds to step 414, which directs both steps 410 and 412 to step 416, at which the UWB scheduler uses in_win and in_win_weight_sum for access time computation. In some embodiments, step 416 is optional, and is performed when using method 200 to compute access time for each UWB session. That is, when using method 200, the computation of access time can be performed during method 400 or after method 400. For example, referring to the description of method 200, each sub-period, e.g., (i), ..., or (v), may be a window, and the computed access time of the UWB session in the current window may be computed as

$$\frac{duration\ of\ sub\text{-}period \times w_i}{sub\text{-}period\_weight\_sum} =$$

$$\frac{(win\_end\_ms - win\_begin\_ms) \times w_i}{in\_win\_weight\_sum}$$

. In some embodiments, when using methods 210 and 220, the computation of access time is performed after method 400. At step 418, the UWB scheduler determines whether in_win is not empty and round end time of first session of in_win equals win_end_ms. If yes, method 400 proceeds to step 420; if no, method 400 proceeds to step 424. Referring to FIG. 4C, the UWB scheduler determines in_win is not empty and the round end time of UWB session 440 is not equal to win_end_ms (which is equal to the round begin time of the first UWB session 442 of the out_win). Method 400 then proceeds to step 424.

At step 424, the UWB scheduler determines whether in_win is not empty and out_win is not empty and round begin time of the first session of out_win equals win_end_ms. If yes, method 400 proceeds to step 426; if no, method 400 proceeds to step 430. Referring to FIG. 4C, the UWB scheduler determines in_win is not empty and out_win is not empty and round begin time of UWB session 442 (e.g., the first session of out_win) is equal to win_end_ms. Method 400 then proceeds to step 426.

At step 426, the UWB scheduler adds weight (priority value) of the first session of out_win to in_win_weight_sum. Referring to FIG. 4C, the UWB scheduler adds the priority value (50) of UWB session 442 into in_win_weight_sum (100), such that in_win_weight_sum is updated to be 150 for state 2.

At step 428, the UWB scheduler moves first session from out_win to in_win. Referring to FIG. 4C, the UWB scheduler moves/add UWB session 442 to in_win. Method 400 then proceeds to step 424, at which the UWB scheduler determines in_win is not empty and out_win is not empty and round begin time of UWB session 444 (e.g., now the first session of out_win) is not equal to win_end_ms (which is equal to the round begin time of UWB session 442). Method 400 then proceeds to step 430, at which the UWB scheduler set win_begin_ms to win_end_ms. Referring to FIG. 4C, the UWB scheduler may set win_begin_ms to the win_end_ms (e.g., the round begin time of UWB session 442) of state 1. Method 400 then proceeds to step 406, and starts state 2.

At step 406, the UWB scheduler determines in_win not empty, and proceeds to step 408, which the UWB scheduler set win_end_ms to the round end time of the first session of in_win. Referring to FIG. 4C, the UWB scheduler sets win_end_ms to round end time of UWB session 440. Method 400 proceeds to step 410, at which the UWB scheduler determines out_win not empty, and method 400 proceeds to step 412, at which the UWB scheduler set win_end_ms to the minimum of win_end_ms and round begin time of first session of out_win. Referring to FIG. 4C, the UWB scheduler sets/maintains win_end_ms to round end time of UWB session 440, which is the minimum of round end time of UWB session 440 and the round begin time of UWB session 444. Method 400 may then proceed to steps 414 and 416, at which the UWB scheduler computes the access time for UWB sessions 440 and 442 in the window (between win_begin_ms and win_end_ms) using method 200.

Method 400 may then proceed to step 418, at which the UWB scheduler determines whether in_win is not empty and round end time of first session of in_win equals win_end_ms. If yes, method 400 proceeds to step 420; if no, method 400 proceeds to step 424. Referring to FIG. 4C, the UWB scheduler determines in_win is not empty and the round end time of UWB session 440 is equal to win_end_ms.

Method 400 then proceeds to step 420, at which the UWB scheduler subtracts weight (priority value) of first session of in_win from in_win_weight_sum. Referring to FIG. 4C, the UWB scheduler subtracts the priority value (50) of UWB session 440 from in_win_weight_sum (150), resulting in_win_weight_sum to be 50 for state 3.

At step 422, the UWB scheduler moves the first session from in_win to *cset.* Referring to FIG. 4C, at state 3, the UWB scheduler may move/add UWB session 440 to *cset.* Method 400 then proceeds to step 418, at which the UWB scheduler determines in_win not empty and round end time of the first session of in_win is not equal to win_end_ms. Referring to FIG. 4C, the UWB scheduler determines in_win not empty and round end time of UWB session 442 is not equal to win_end_ms (e.g., the round end time of UWB session 440). Method 400 then proceeds to step 424, at which the UWB scheduler determines in_win not empty and out_win not empty and round begin time of the first session of out_win is not equal to the win_end_ms. Referring to FIG. 4C, at state 2, the UWB scheduler determines the round begin time of UWB session 444 is not equal to win_end_ms (e.g., the round end time of UWB session 440). Method 400 may then proceed to step 430, at which the controller sets win_begin_ms to win_end_ms. Referring to FIG. 4C, the UWB scheduler sets win_begin_ms to the current win_end_ms, which is the round end time of UWB session 440, and method proceeds to step 406.

Similar to previous description of states 1 and 2, the UWB scheduler may then determine win_end_ms to be the minimum of first session of in_win (e.g., UWB session 442) and the round begin time of the first session of out_win (e.g., UWB session 444) at steps 408 and 412. Optionally, the UWB scheduler may compute the access time (e.g., of UWB session 442) in the window in state 3. UWB scheduler may then determine in_win not empty and round end time of first session of in_win (e.g., UWB session 442) is not equal to win_end_ms, and method proceeds to step 424, at which the UWB scheduler determines in_win not empty and out_win not empty and round begin time of first session of out_win (e.g., UWB session 444) is equal to win_end_ms. Method 400 then proceeds to update in_win_weight_sum by adding weight (priority value) of first session of out_win (e.g., UWB session 444) at step 426. As shown in FIG. 4C, at state 3, in_win_weight_sum is 100 at state 4. At step 428, the UWB scheduler moves the first session (e.g., UWB session 444) from out_win to in_win. Method 400 then proceeds to step 424 and determines round begin time of first session of out_win (e.g., UWB session 446) is not equal to win_end_ms (e.g., round begin time of UWB session 444), and then proceeds to step 430, at which the UWB scheduler sets win_begin_ms to current win_end_ms (e.g., the round begin time of UWB session 444).

Method 400 then proceeds to steps 406-412, at which the UWB scheduler sets win_end_ms to the first session of in_win (e.g., UWB session 444), and then performs step 416 as an optional operation. Method 400 then proceeds to step 418, 420, and 422, where the UWB scheduler subtract weight (priority value) of UWB session 444 from in_win_weight_sum (100), and obtains 50 for in_win_weight_sum, at state 5. UWB scheduler may then move UWB session 444 to cset. UWB session 442 may be the only session in in_win.

Method 400 then proceeds to step 418, 424, and 430, at which the UWB scheduler sets win_begin_ms to the current win_end_ms (e.g., the round end time of UWB session 444). Method 400 then proceeds to steps 406 and 408, at which the UWB scheduler sets win_end_ms to the round end time of the first session of in_win (e.g., UWB session 442). Method 400 proceeds to steps 410 and 412, at which the UWB scheduler maintains win_end_ms as the round end time of the first session of in_win (e.g., UWB session 442). Method 400 then proceeds to step 414, optional step 416, step 418, step 420, and step 422. At steps 420 and 422, the UWB scheduler subtracts weight (priority value) of the first session of in_win (e.g., UWB device 442) from in_win_weight_sum, resulting in_win_weight_sum to be 0 in state 6/end state. The UWB scheduler also moves the first session (e.g., UWB device 442) from in_win to cset, as shown in state 6/end state. Thus, all colliding UWB sessions, e.g., 440, 442, and 444 are in cset.

Method 400 then proceeds to step 424, as in_win is empty, and then to step 430, at which the UWB scheduler sets win_begin_ms to the existing win_end_ms (e.g., the round end time of UWB session 442). Method 400 then proceeds to step 406, and then proceeds to "End" as in_win is empty.

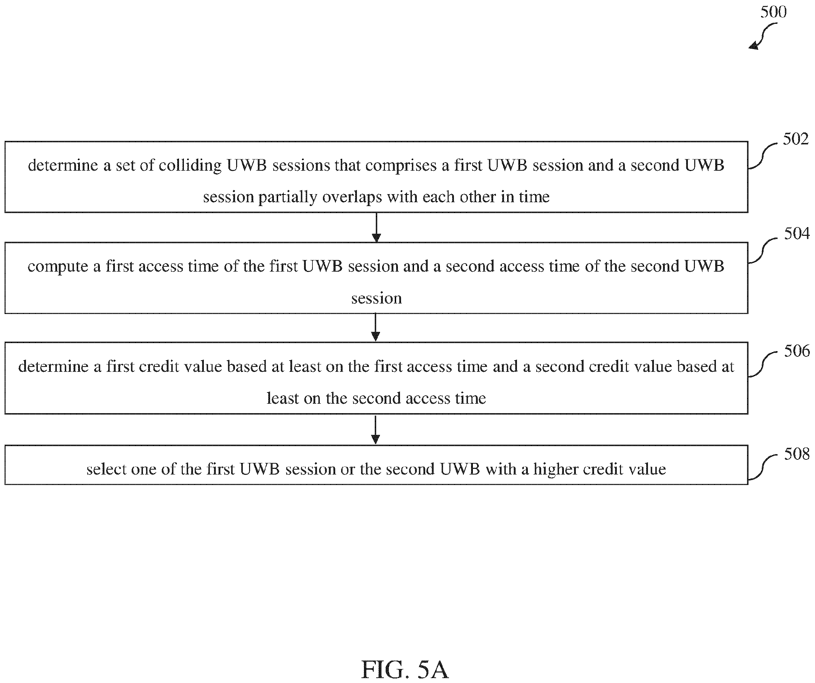

FIG. 5A is a flowchart of a method 500 for a UWB scheduler (e.g., first device 102) to schedule one or more UWB sessions, according to some embodiments of the present disclosure. Method 500 is merely an example, and is not intended to limit the present disclosure beyond what is explicitly recited in the claims. Additional operations can be provided before, during, and after the method 500, and some operations described can be replaced, eliminated, or moved around for additional embodiments of method 500. For ease of illustration, FIG. 5A is described in connection with FIGS. 2A-2C, 3A, 3B, and 4D.

At step 502, the UWB scheduler determines a set of colliding UWB sessions that comprises a first UWB session and a second UWB session (e.g., UWB sessions 440, 442, 444) partially overlaps with each other in time.

At step 504, the UWB scheduler computes a first access time (e.g., one of 212, 214, and 216) of the first UWB session and a second access time (e.g., another one of 212, 214, and 216) of the second UWB session.

At step 506, the UWB scheduler determines a first credit value (e.g., step 309 and 319, or step 311) based at least on the first access time and a second credit value (e.g., step 309 and 319, or step 311) based at least on the second access time.

At step 508, the UWB scheduler selects one of the first UWB session or the second UWB with a higher credit value (e.g., step 310 or step 311).

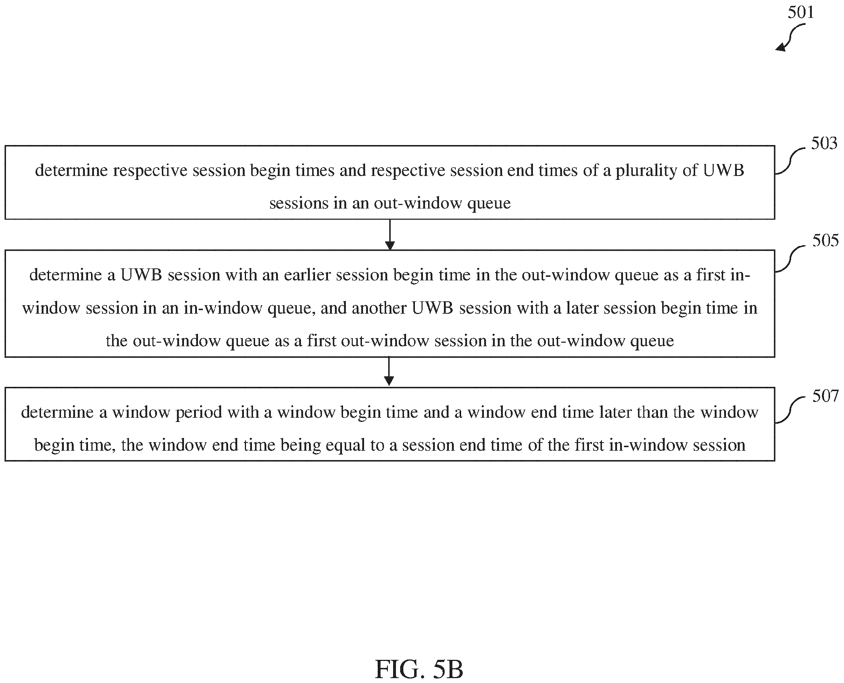

FIG. 5B is a flowchart of a method 501 for a UWB scheduler (e.g., first device 102) to detect a set of colliding UWB sessions, according to some embodiments of the present disclosure. In some embodiments, method 501 is performed prior to method 500 or at the same time with method 500. Method 501 is merely an example, and is not intended to limit the present disclosure beyond what is explicitly recited in the claims. Additional operations can be provided before, during, and after the method 501, and some operations described can be replaced, eliminated, or moved around for additional embodiments of method 501. For ease of illustration, FIG. 5B is described in connection with FIGS. 4A-4D.

At step 503, the UWB scheduler determines respective round begin times and respective round end times of a plurality of UWB sessions in an out-window queue (e.g., step 404).

At step 505, the UWB scheduler determines a UWB session with an earlier round begin time in the out-window queue as a first in-window session in an in-window queue, and another UWB session with a later round begin time in the out-window queue as a first out-window session in the out-window queue (e.g., step 408).

At step 507, the UWB scheduler determines a window period with a window begin time and a window end time later than the window begin time, the window end time being equal to a round end time of the first in-window session (e.g., step 412).

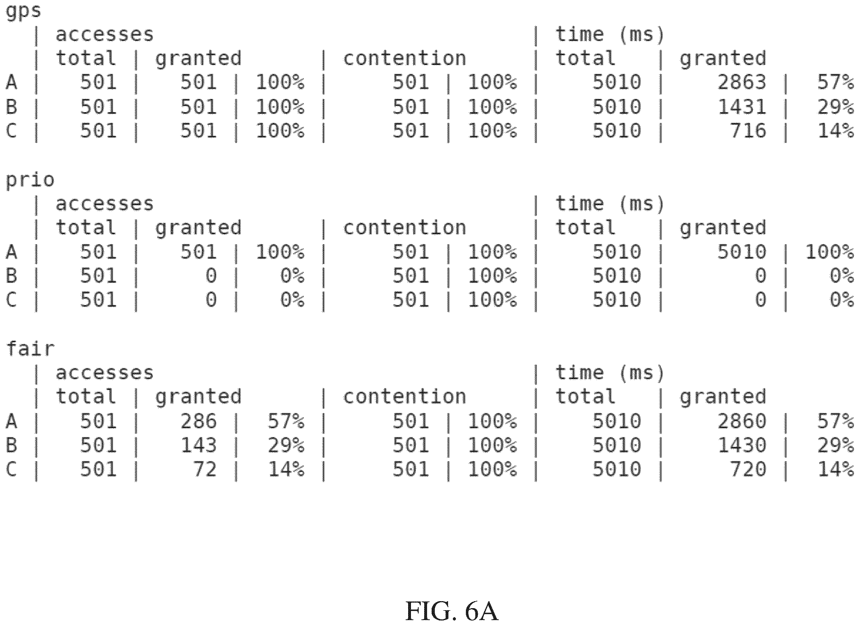

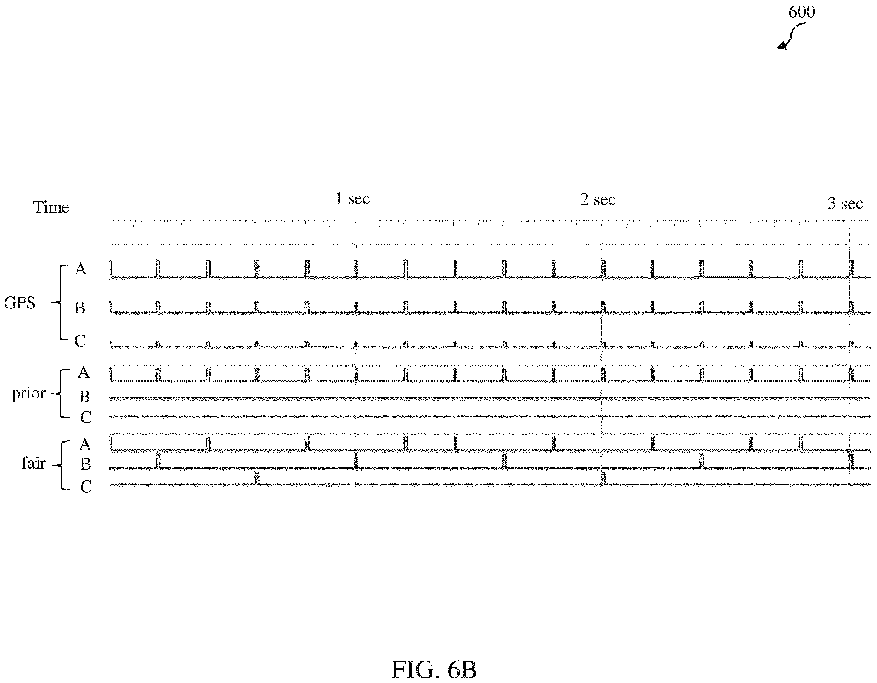

FIGS. 6A and 6B show simulation results of three UWB sessions, A with priority value 100, B with priority value 50, and C with priority value 25. "GPS" refers to the ideal generalized processor sharing (e.g., the computed access time using method 200), "prior" refers to the existing hard priority scheduler, and "fair" refers to fair scheduler using scheduling method 300 and the computed access time (e.g., using method 200) of the present disclosure. It can be shown that in the same time duration, using the existing hard priority scheduler, UWB session A (with the highest priority value) has access all the time, while UWB sessions B and C have little or no access to the medium, causing starvation. Instead, the average access times of UWB sessions A, B, and C by fair scheduler of the present disclosure are comparable/-similar to those computed using GPS over several block durations, suggesting that the fair scheduler can provide a more fair, close to ideal scheduling of UWB sessions of different priority values, avoiding starvation. The communication between a UWB scheduler and more than one second devices can be improved.

Therefore, from one perspective, there has been described a method for scheduling ultra-wideband (UWB) sessions. The method includes: determining a set of colliding UWB sessions that comprises a first UWB session and a second UWB session partially overlaps with each other in time; computing a first access time of the first UWB session and a second access time of the second UWB session; determining a first credit value based at least on the first access time and a second credit value based at least one the second access time; and selecting one of the first UWB session or the second UWB with a higher credit value.

Those skilled in the art will recognize improvements and modifications to the illustrated embodiments of the present disclosure. All such improvements and modifications are considered within the scope of the concepts disclosed herein and the claims that follow.

**Claims**

1. A method for scheduling ultra-wideband (UWB) sessions, comprising:

   determining a set of colliding UWB sessions that comprises a first UWB session and a second UWB session partially overlaps with each other in time;
   computing a first access time of the first UWB session and a second access time of the second UWB session;
   determining a first credit value based at least on the first access time and a second credit value based at least one the second access time; and
   selecting one of the first UWB session or the second UWB with a higher credit value.

2. The method of claim 1, wherein:

   the determining of the first credit value comprises computing a first session deficit value of the first UWB session based on the first access time and a previous first session deficit value; and
   the determining of the second credit value comprises computing a second session deficit value of the second UWB session based on the second access time and a previous second session deficit value.

3. The method of claim 2, further comprising:

   selecting one of the first UWB session and the second UWB with a higher deficit value;
   updating a respective session deficit value of the selected UWB session by subtracting a round duration of the selected UWB session; and
   perform access with the selected session.

4. The method of claim 2 or 3, wherein the computing of the first access time of the first UWB session and the second access of the second UWB session comprises:

   determining a time period in which the first UWB session overlaps with the second UWB session;
   determining a priority sum value including a sum of a first priority value of the first UWB session and a second priority value of the second UWB session;
   computing a first shared time proportional to a length of the time period and a first priority value of the first UWB session, and inversely proportional to the priority sum value; and
   computing a second shared time proportional to the length of the time period and a second priority value of the second UWB session, and inversely proportional to the priority sum value.

5. The method of claim 4, wherein:

the computing of the first access time comprises adding the first shared time with a duration of the first UWB session that is non-overlapping with the second UWB session; and
the computing of the second access time comprises adding the second shared time with a duration of the second UWB session that is non-overlapping with the first UWB session.

6. The method of claim 2 or 3, wherein the computing of the first access time of the first UWB session and the second access of the second UWB session comprises:

determining a priority sum value including a sum of priority values of all colliding UWB sessions;
computing the first access time proportional to a duration of the first UWB session and a first priority value of the first UWB session, and inversely proportional to the priority sum value; and
computing the second access time proportional to a duration of the second UWB session and a second priority value of the second UWB session, and inversely proportional to the priority sum value.

7. The method of any of claims 2 to 6, further comprising:

computing a first session deficit difference value of the first UWB session to be equal to the first access time; and
computing a second session deficit difference value of the second UWB session to be equal to the second access time.

8. The method of claim 7, wherein:

the determining of the first credit value comprises determining a first deficit sum value equal to the first session deficit difference value and the first session deficit value; and
the determining of the second credit value comprises determining a second deficit sum value equal to the second session deficit difference value and the second session deficit value.

9. The method of claim 8, wherein the selecting one of the first UWB session or the second UWB with the higher credit value comprises:

selecting one of the first UWB session and the second UWB with a higher deficit sum value;

and
updating a respective session deficit value of the selected UWB session by subtracting a ranging round duration.

10. The method of claim 9, further comprising:

determining a respective round begin time of the first UWB session and the second UWB session;
determining a non-selected UWB session overlapping with the selected UWB session and having the respective round begin time earlier than an round end time of the selected UWB session;
updating a respective session deficit value of the non-selected UWB session by adding the respective session deficit difference value; and
perform access with the selected session.

11. A method for determining a set of colliding ultra-wideband (UWB) sessions, comprising:

determining respective round begin times and respective round end times of a plurality of UWB sessions in an out-window queue;
determining a UWB session with an earlier round begin time in the out-window queue as a first in-window session in an in-window queue, and another UWB session with a later round begin time in the out-window queue as a first out-window session in the out-window queue; and
determining a window period with a window begin time and a window end time later than the window begin time, the window end time being equal to a round end time of the first in-window session.

12. The method of claim 11, further comprising:

determining whether the out-window queue is empty; and
in response to the out-window queue not being empty, updating the window end time to be a minimum of the round end time of the first in-window session or a round begin time of the first out-window session.

13. The method of claim 12, further comprising, in response to the out-window queue being empty, computing access time of a respective UWB session using the respective priority value and a priority sum value including a sum of all priority values of the UWB sessions in the window period.

14. The method of claim 12 or 13, further comprising, after the updating of the window end time, computing an access time of a respective UWB session using the respective priority value and a priority sum value including a sum of all priority values of the UWB sessions in the window period.

15. The method of claim 12, 13 or 14, further comprising, in response to the in-window queue not empty, the out-window queue not empty, and the round begin time of the first out-window session being equal to the window end time:

> adding the first out-window session to the in-window session as a second in-window session; determining a second out-window session to be a new first out-window session; and updating an in-window priority sum by including a priority value of the second in-window.

FIG. 1A

102

119

117

107 Transceiver

105 DSP

103 Processor

115

113 Output Device(s)

111 Input Device(s)

109 Memory

FIG. 1B

FIG. 1C

EP 4 535 917 A2

FIG. 2A

FIG. 2B

EP 4 535 917 A2

FIG. 2C

300

302 Start

Determine the set of colliding sessions

304 For each colliding session

306 Compute access time

308 Session deficit=session deficit + computed access time

310 Select the session with the highest deficit

312 Session deficit = session deficit – round duration

314 Perform access with the selected session

FIG. 3A

24

```
                        ┌─────────┐
                        │  Start  │
                        └─────────┘
                             │                      303                    ↙ 301
                             ▼
        ┌──────────────────────────────────────────────┐
        │      Determine the set of colliding sessions  │
        └──────────────────────────────────────────────┘
                             │                305
                             ▼
        ◁──────────── For each colliding session ───────────▷
                             │              307
                             ▼
              ┌──────────────────────────┐
              │     Compute access time  │
              └──────────────────────────┘
                             │                    309
                             ▼
        ┌──────────────────────────────────────────────┐
        │  Session deficit difference = computed access time │
        └──────────────────────────────────────────────┘
                             │                      311
                             ▼
┌──────────────────────────────────────────────────────────────────────────┐
│ Select the session with the highest sum of session deficit and session deficit difference │
└──────────────────────────────────────────────────────────────────────────┘
                             │              313
                             ▼
        ┌──────────────────────────────────────────┐
        │  Session deficit = session deficit – round duration │
        └──────────────────────────────────────────┘
                             │              315
                             ▼
        ◁──────────── For each colliding session ───────────▷
                             │              317
                             ▼                                  No
        ◁──────── Start before end of selected session ───────▷
                             │ Yes             319
                             ▼
        ┌──────────────────────────────────────────────┐
        │  Session deficit = session deficit + session deficit difference │
        └──────────────────────────────────────────────┘
                             │              321
                             ▼
                           ◇
                             │
                             ▼
        ┌──────────────────────────────────────┐
        │  Perform access with the selected session │      323
        └──────────────────────────────────────┘
```

FIG. 3B

```
                    ┌─────────┐
                    │  Start  │
                    └────┬────┘
                         │                                          400
              ┌──────────▼──────────┐  402
              │  define parameters  │
              └──────────┬──────────┘  404
              ┌──────────▼──────────┐
              │   initialization    │
              └──────────┬──────────┘  406
      ┌─────┐    Yes  ◇──▼──◇
      │ End │◄────────┤ in_win │◄──────────────────────── 430
      └─────┘         │ empty? │
                      ◇───┬────◇
                          │ No                          408
         ┌────────────────▼────────────────────────────────┐
         │ set win_end_ms to session end time of first      │
         │           session of in_win                      │
         └────────────────┬────────────────────────────────┘  410
                     ◇────▼────◇      Yes
                     │ out_win  ├──────────────┐
                     │ empty?   │              │
                     ◇────┬─────◇              │
                          │ No          412    │
         ┌────────────────▼────────────────────┐│
         │ set win_end_ms to minimum of         ││
         │ win_end_ms and session begin time    ││
         │ of first session of out_win          ││
         └────────────────┬─────────────────────┘│  414
                          ▼                       │
                         ◇─◇◄────────────────────┘  416
         ┌────────────────┼────────────────────────────────┐
         │ use in_win and in_win_weight_sum for access      │
         │            time computation                      │
         └────────────────┬────────────────────────────────┘  418
    No             ◇──────▼──────────────────────────────◇
424 ◄──────────────┤ in_win not empty and session end time │◄──────┐
                   │ of first session of in_win equals      │       │
                   │            win_end_ms?                 │       │
                   ◇──────┬──────────────────────────────◇          │
                          │ Yes                          420        │
         ┌────────────────▼────────────────────────────────┐       │
         │ subtract weight of first session of in_win from  │       │
         │           in_win_weight_sum                      │       │
         └────────────────┬────────────────────────────────┘  422  │
         ┌────────────────▼────────────────────────────────┐       │
         │  move first session from in_win to cset          ├───────┘
         └──────────────────────────────────────────────────┘
```

FIG. 4A

418

424

No

in_win not empty and out_win not empty and session begin time of first session of out_win equals win_end_ms?

Yes

426

add weight of first session of out_win to in_win_weight_sum

428

move first session from out_win to in_win

430

set win_begin_ms to win_end_ms

406

FIG. 4B

EP 4 535 917 A2

FIG. 4C

FIG. 4D

500

502

determine a set of colliding UWB sessions that comprises a first UWB session and a second UWB session partially overlaps with each other in time

504

compute a first access time of the first UWB session and a second access time of the second UWB session

506

determine a first credit value based at least on the first access time and a second credit value based at least on the second access time

508

select one of the first UWB session or the second UWB with a higher credit value

FIG. 5A

EP 4 535 917 A2

EP 4 535 917 A2

501

| determine respective session begin times and respective session end times of a plurality of UWB sessions in an out-window queue | 503 |

| determine a UWB session with an earlier session begin time in the out-window queue as a first in-window session in an in-window queue, and another UWB session with a later session begin time in the out-window queue as a first out-window session in the out-window queue | 505 |

| determine a window period with a window begin time and a window end time later than the window begin time, the window end time being equal to a session end time of the first in-window session | 507 |

FIG. 5B

```
gps
  | accesses                            | time (ms)
  | total | granted       | contention | total | granted
A |   501 |   501 | 100% |   501 | 100% |  5010 |   2863 | 57%
B |   501 |   501 | 100% |   501 | 100% |  5010 |   1431 | 29%
C |   501 |   501 | 100% |   501 | 100% |  5010 |    716 | 14%

prio
  | accesses                            | time (ms)
  | total | granted       | contention | total | granted
A |   501 |   501 | 100% |   501 | 100% |  5010 |   5010 | 100%
B |   501 |     0 |   0% |   501 | 100% |  5010 |      0 |   0%
C |   501 |     0 |   0% |   501 | 100% |  5010 |      0 |   0%

fair
  | accesses                            | time (ms)
  | total | granted       | contention | total | granted
A |   501 |   286 |  57% |   501 | 100% |  5010 |   2860 | 57%
B |   501 |   143 |  29% |   501 | 100% |  5010 |   1430 | 29%
C |   501 |    72 |  14% |   501 | 100% |  5010 |    720 | 14%
```

FIG. 6A

EP 4 535 917 A2

EP 4 535 917 A2

600

FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63651755
- US 63587943